# EUROPÄISCHE PATENTSCHRIFT

(11) **EP 2 924 330 B1**
(45) Veröffentlichungstag und Bekanntmachung des Hinweises auf die Patenterteilung: **31.01.2018**
(21) Anmeldenummer: 14162015.3
(22) Anmeldetag: 27.03.2014
(51) Int. Cl.: F16L 55/04, F16L 55/045, F16L 55/053, F02M 37/00, F17D 1/20, F02M 55/04

(54) **Vorrichtung und Verfahren zum Schutz vor Fluidpulsationen**
Device and method for protection against fluid pulsations
Dispositif et procédé de protection contre les pulsations de fluide

(43) Veröffentlichungstag der Anmeldung: 30.09.2015
(73) Patentinhaber: Sonplas GmbH, 94315 Straubing (DE)
(72) Erfinder: Frankl, Herbert, 94315 Straubing (DE)
(74) Vertreter: Wunderlich, Rainer

(56) Entgegenhaltungen:
- EP-A2- 2 112 368
- DE-B1- 2 000 836
- US-A- 2 592 613
- US-A- 2 731 984
- US-A- 3 672 402

## Beschreibung

Die vorliegende Erfindung betrifft eine Vorrichtung zum Schutz vor Fluidpulsationen nach dem Oberbegriff des Anspruchs 1 sowie ein Verfahren zum Schutz vor Fluidpulsationen nach dem Oberbegriff des Anspruchs 10. Fluidpulsationen treten in hydraulischen Systemen auf und können eine Pulsation, das heißt eine kurzzeitige Schwankung, des Volumenstroms oder des Drucks eines Fluids umfassen. Solche Pulsationen werden beispielsweise von Pumpen und bei Schaltvorgängen von Ventilen oder anderen Absperrmitteln erzeugt.

Von dem Fluid werden Bauteile durchflossen, welche vorliegend auch als Durchströmungskomponenten bezeichnet werden und beispielsweise Durchflussmessgeräte oder andere Sensoren umfassen können. Diese reagieren teilweise empfindlich auf Pulsationen. So können Fehlfunktionen, ein vorzeitiger Ausfall, Verschleiß oder auch die Zerstörung der Komponente auftreten.

Als konkretes Beispiel kann das Schalten eines Einspritzventils für einen Verbrennungsmotor Volumen- oder Druckpulse erzeugen, welche ein Durchflussmessgerät, das fluidmäßig mit dem Einspritzventil verbunden ist, stören oder beschädigen kann.

Dieses Problem wird dadurch verschärft, dass oftmals mehrere Einrichtungen Pulsationen erzeugen, welche sich überlagern und so den Druck, für den das hydraulische System ausgelegt ist, weit überschreiten können.

Daher ist es ein grundlegendes Ziel, bestimmte Durchströmungskomponenten vor Pulsationen zu schützen.

Eine zu diesem Zweck ausgelegte gattungsgemäße Vorrichtung zum Schutz vor Fluidpulsationen umfasst zunächst einen ersten und einen zweiten Fluidanschluss sowie einen dazwischen gelegenen Innenraum.

In dem Innenraum sind herkömmlicherweise Dämpfungsmittel angeordnet, welche Druck- oder Volumenspitzen eines durchströmenden Fluids dämpfen. Bei diesen herkömmlichen Vorrichtungen tritt das Fluid durch den ersten Fluidanschluss ein und verlässt gedämpft die Vorrichtung am zweiten Fluidanschluss.

Bei einem gattungsgemäßen Verfahren zum Schutz vor Fluidpulsationen wird ein Fluid von einer Zuführleitung durch eine Durchströmungskomponente und weiter durch eine Abführleitung geleitet. Dabei wird das Fluid zu einer Vorrichtung zum Schutz vor Fluidpulsationen geleitet, welche fluidmäßig mit der Durchströmungskomponente verbunden ist. Eine fluidmäßige Verbindung kann dahingehend verstanden werden, dass sich ein Fluid von einer der verbundenen Komponenten zur anderen ausbreiten kann.

Herkömmlicherweise werden durch Dämpfungselemente in der Vorrichtung Pulsationen reduziert, wenn die Vorrichtung durchströmt wird. Daher wird die Vorrichtung zweckmäßigerweise stromaufwärts zu der Durchströmungskomponente angeordnet.

Herkömmliche Dämpfungselemente umfassen beispielsweise gasbefüllte Blasen oder Hydro- bzw. Membranspeicher. Diese sind für eine spezielle Anwendung aufwändig dimensioniert. Ändern sich die Pulsationsverhältnisse oder der Druck im Hydraulikkreis, beispielsweise durch einen frequenzgesteuerten Pumpenantrieb, so nimmt die Dämpfungswirkung stark ab. Daher sind oftmals mehrere verschiedene Dämpfungselemente vorhanden.

Aber auch wenn mehrere Dämpfungselemente eine Pulsation stark dämpfen, führen sie dennoch oft zu einer unerwünschten Änderung der Fluiddynamik. Kleinvolumige Pulsationsdämpfer bewirken häufig eine Einschnürung des Durchflusses und damit Druckverluste. Großvolumige Pulsationsdämpfer reagieren hingegen verhältnismäßig träge auf gewünschte dynamische Druckänderungen und haben oft negative Auswirkungen auf Durchflussmessungen.

Im Ergebnis sind daher bekannte Vorrichtungen und Verfahren zum Schutz vor Pulsationen technisch verhältnismäßig aufwendig und stellen einen erheblichen Mehraufwand dar, der sich auch in den verbundenen finanziellen Kosten widerspiegelt.

Insbesondere wenn die Bandbreite möglicher Pulsationen hoch ist, kann herkömmlicherweise kaum eine zufriedenstellende Dämpfung erreicht werden. Es wird daher in Kauf genommen, kritische Durchströmungskomponenten, die durch Pulsationen einem erhöhten Verschleiß unterliegen, regelmäßig auszutauschen.

Die US 2,592,613 lehrt eine Pulsationsdämpfungsvorrichtung, welche parallel zu einem Rohr mit diesem verbunden ist. Die Vorrichtung umfasst eine einzelne elastische Membran mit einem dahinter eingeschlossenen Dämpfungsgas, mittels welcher eine Dämpfung von Fluidpulsationen erreicht werden soll. Die Membran ist an einem stromaufwärts gelegenen Ende der Vorrichtung angebracht und koaxial zur Flussrichtung des Fluids ausgerichtet. Dieses Dokument wird als nächster Stand der Technik gegenüber Anspruch 1 angesehen.
Aus der US 2,731,984 geht ein Dämpfungselement mit einem flexiblen Schlauch hervor, welcher in einem parallel zur Strömungsrichtung ausgerichteten Gehäuse angeordnet ist und mit dem Fluid in der Strömungsleitung fluidisch über die Zuführleitung und die Abführleitung verbunden ist.

Aus der US 3,672,402 ist es bekannt, ein fluidisches Dämpfungselement mit einem Kolben vorzusehen, der ein pulsierendes Fluid von einem dämpfenden Gasraum trennt, wobei der Druck in dem Gasraum mittels eines federvorgespannten Stellkolbens eingestellt werden kann. Aus der EP 2 112 368 A wird eine Vorrichtung zum Schutz vor Fluidpulsationen mit einem ersten und einem zweiten Fluidanschluss und einem zwischen diesen gelegenen Innenraum bekannt, wobei der Durchfluss durch die Vorrichtung vorgesehen ist.
Aus der DE 2 000 836 A ist eine Vorrichtung zum Schutz vor Fluidpulsationen mit einem ersten Fluidanschluss, einem zweiten Fluidanschluss und einem zwischen diesen gelegenen Innenraum bekannt, wobei in dem Innenraum ein aus zwei Membranen gebildetes elastisches Trennmittel vorgesehen ist, welches eine Innenpassage zur Erkennung von Leckagen aufweist. Als eine **Aufgabe** der Erfindung kann erachtet werden, eine Vorrichtung und ein Verfahren bereitzustellen, welche in einfacher Weise einen besonders wirkungsvollen Schutz vor Fluidpulsationen erzielen.

Diese Aufgabe wird erfindungsgemäß durch die Vorrichtung mit den Merkmalen des Anspruchs 1 und das Verfahren mit den Merkmalen des Anspruchs 10 gelöst.

Bevorzugte Ausgestaltungen sind in den abhängigen Ansprüchen und der folgenden Beschreibung angegeben.

Bei der Vorrichtung zum Schutz vor Fluidpulsationen der oben genannten Art ist erfindungsgemäß vorgesehen, dass in dem Innenraum der Vorrichtung mindestens ein Trennmittel vorgesehen ist, welches den Innenraum in zumindest eine erste Kammer, die dem ersten Fluidanschluss zugewandt ist, und eine zweite Kammer, die dem zweiten Fluidanschluss zugewandt ist, fluidmäßig trennt und so einen Durchfluss durch die Vorrichtung verhindert. Zudem ist jedes Trennmittel bewegbar zum Dämpfen oder Weiterleiten einer auftreffenden Fluidpulsation.

Als ein Kerngedanke der Erfindung wird die Vorrichtung also nicht von dem Fluid durchströmt. Vielmehr wirkt das Fluid auf bewegbare Trennmittel, welches Impulse des Fluids aufnehmen und diese dämpfen und weiterleiten kann. Da es während einer Pulsation zu einer geänderten Druckdifferenz zwischen den mindestens zwei Kammern der Vorrichtung kommt, führt jedes Trennmittel während der Pulsation eine reversible Bewegung oder Auslenkung aus, welche auch das dem Fluid zur Verfügung stehende Volumen variiert.

Die erfindungsgemäße Vorrichtung ist besonders wirkungsvoll, wenn sie fluidmäßig parallel zu der zu schützenden Durchströmungskomponente verbunden ist. Dann wird eine Pulsation auf dem parallelen Zweig im Wesentlichen um die Durchströmungskomponente herum geleitet. Ist die Durchströmungskomponente ein Durchflussmesser oder ein anderes zu schützendes Bauteil, so wird dieses größtenteils von auftretenden Pulsationen verschont.

Als wesentlicher Vorteil wird somit die Pulsation an der zu schützenden Durchströmungskomponente vorbei geleitet, während der gewünschte pulsationsarme oder -freie Anteil der Fluidströmung vollständig durch die Durchströmungskomponente geleitet wird.

Diese Wirkungsweise wird bei einer erfindungsgemäßen Anlage verwirklicht, welche eine Durchströmungskomponente, die von einem Fluid durchströmbar ist, eine Zuführleitung zum Leiten des Fluids zu der Durchströmungskomponente, eine Abführleitung zum Weg- oder Weiterleiten des Fluids von der Durchströmungskomponente und eine erfindungsgemäße Vorrichtung umfasst. Dabei ist die Vorrichtung mit der Zuführleitung und der Abführleitung parallel zu der Durchströmungskomponente verbunden.

Die erfindungsgemäße Anlage unterscheidet sich somit grundlegend von herkömmlichen Anlagen, bei denen eine Dämpfungseinrichtung in Reihe zu der zu schützenden Durchströmungskomponente angeordnet ist.

Während also der erste Fluidanschluss der Vorrichtung mit der Zuführleitung verbunden ist und der zweite Fluidanschluss mit der Abführleitung verbunden ist, kann es durch die bewegbaren Trennmittel zu keinem Volumenstrom durch die Vorrichtung kommen.

Die Fluidverbindung über den zweiten Fluidanschluss sorgt dafür, dass auch ein Schutz vor Pulsationen bewirkt wird, welche sich von der Abführleitung zur Zuführleitung ausbreiten. Dies kann beispielsweise beim Schalten von stromabwärts gelegenen Ventilen vorkommen.

Als weiterer Vorteil der Fluidverbindung der Vorrichtung über sowohl den ersten als auch den zweiten Fluidanschluss werden die Drucke, die auf die beiden Seiten jedes bewegbaren Trennmittels wirken, durch die Drucke stromaufwärts und stromabwärts zur Vorrichtung bestimmt, also insbesondere durch die Drucke in der Zuführ- und der Abführleitung. Eine Auslenkung, Verformung oder Verschiebung jedes bewegbaren Trennmittels ist daher allein durch eine Pulsation bedingt, das heißt im Wesentlichen durch eine Differenz zwischen den stromaufwärts und stromabwärts vorliegenden Fluideigenschaften, nicht etwa durch den Gesamtwert des Drucks oder Volumenstroms in beispielsweise der Zuführleitung. Dadurch kann die Vorrichtung bei einer großen Spanne verschiedener Betriebsdrucke und Volumenströmen eingesetzt werden.

Bei dem Verfahren der oben genannten Art ist gemäß der Erfindung in entsprechender Weise vorgesehen, dass die Vorrichtung zum Schutz vor Fluidpulsationen mit der Zuführleitung und der Abführleitung parallel zu der Durchströmungskomponente verbunden ist. In einem Innenraum der Vorrichtung sind mindestens zwei bewegbaren Trennmittel vorgesehen, welche den Innenraum in zumindest eine erste Kammer, eine zentrale Kammer und eine zweite Kammer fluidmäßig trennt, wobei die erste Kammer mit der Zuführleitung fluidmäßig verbunden ist und die zweite Kammer mit der Abführleitung fluidmäßig verbunden ist. Bei einer Pulsation des Fluids in der Zuführleitung oder in der Abführleitung wird ein Impuls an jedes bewegbare Trennmittel übertragen, aber es erfolgt kein Durchfluss des Fluids durch die Vorrichtung.

Die Kammern und die Fluidanschlüsse der erfindungsgemäßen Vorrichtung können funktional definiert sein. So können die Kammern beispielsweise auch durch Rohrabschnitte gebildet sein, die gleich der Zuführ- und Abführleitung geformt sind. Als Fluidanschlüsse kann prinzipiell auch ein offenes Ende der Kammern dienen, an welche Verbindungen zur Zuführ- beziehungsweise Abführleitung angebracht werden können. Bei einer bevorzugten Variante haben die Fluidanschlüsse aber mechanische Befestigungsmittel, beispielsweise Schraub- oder Steckmittel, die eine Fluiddurchlassöffnung umgeben. Die Kammern sowie die Trennmittel können einen Querschnitt aufweisen, der größer ist als der der Zuführ- und Abführleitung, womit eine verhältnismäßig große wirksame Fläche zur Pulsationsdämpfung und -übertragung bereitgestellt wird. Jedes bewegbare Trennmittel kann prinzipiell beliebiger Art sein, solange es eine Kraftübertragung von einem Fluid in der ersten Kammer auf ein Fluid in der zweiten Kammer ermöglicht, und umgekehrt. Vorzugsweise hat jedes bewegbare Trennmittel dabei eine dämpfende Wirkung, das heißt bei einer Bewegung eines Trennmittels wird ein Anteil der aufzuwendenden Energie in schlussendlich Wärmeenergie umgewandelt.

Nach der Erfindung ist jedes bewegbare Trennmittel elastisch. Beispielsweise können eine flexible Membran und/oder ein Federbalg eingesetzt werden.

Alternativ oder zusätzlich kann jedes bewegbare Trennmittel verschiebbar sein. So kann es Kolben umfassen, die durch Federn miteinander gekoppelt sind.

Ein besonders starkes Dämpfen von Pulsationen wird dadurch erreicht, dass erfindungsgemäß mindestens zwei bewegbare Trennmittel vorgesehen sind, zwischen denen eine zentrale Kammer gebildet ist, die zwischen der ersten und der zweiten Kammer liegt und von diesen fluidmäßig getrennt ist. Es sind somit zwei hintereinander liegende Trennschichten vorgesehen, an denen jeweils eine Dämpfung eintritt.

Die mindestens zwei Trennmittel sind gleich gebildet sein, beispielsweise jeweils als flexible Membran. Es kann aber auch vorteilhaft sein, wenn sich die Trennmittel in ihrem Aufbau oder ihren Eigenschaften unterscheiden, etwa hinsichtlich ihrer Flexibilität, Auslenkung oder Abmessungen.

Bevorzugt ist die zentrale Kammer mit einem Dämpfungsfluid gefüllt zur Dämpfung von Fluidpulsationen, die auf eines der bewegbaren Trennmittel wirken. Das Dämpfungsfluid kann von dem Fluid, dessen Pulsationen zu dämpfen sind, verschieden sein und kann ein Gas, ein Schmiermittel oder eine Flüssigkeit umfassen. Je nach Gestaltung kann es vorteilhaft sein, wenn das Dämpfungsfluid komprimierbar ist.

An oder in der zentralen Kammer kann eine Messeinrichtung zum Erfassen einer Eigenschaft des Dämpfungsfluids vorgesehen sein. Die Messeinrichtung kann insbesondere einen Druckschalter und/oder -sensor umfassen. Hierdurch kann der Druck in der zentralen Kammer überprüft und gegebenenfalls an veränderte Eigenschaften des Fluids in der ersten und zweiten Kammer angepasst werden.

Diese Anpassung kann auch durch eine Steuereinheit automatisch abhängig von Eigenschaften des Fluids in der ersten und zweiten Kammer erfolgen.

An der zentralen Kammer kann ein zentraler Anschluss zum Verbinden der Messeinrichtung vorgesehen sein. Über diesen Anschluss können auch alternativ oder zusätzlich andere Einrichtungen mit der zentralen Kammer verbunden werden. Zudem ist so ein leichter Austausch der Messeinrichtung möglich. Schließlich kann auch ein Nachfüllen oder Ablassen von Dämpfungsfluid über den zentralen Anschluss erfolgen. Abhängig von der Anwendung können verschiedene Dämpfungsfluide bevorzugt sein.

Auch an den übrigen Kammern können Anschlüsse für Messeinrichtungen, beispielsweise zur Druck- und/oder Volumenmessung, gebildet sein.

Bei der erfindungsgemäßen Anlage weist die Zuführleitung bevorzugt eine Abzweigung auf, an welcher ein Hauptabschnitt der Zuführleitung in Hauptanströmrichtung des Fluids weiter zu der Vorrichtung führt und ein Nebenabschnitt der Zuführleitung in einer abgewinkelten Richtung zu der Durchströmungskomponente führt.

Diese Formung kann wesentlich dazu beitragen, dass die Energie eines Pulses zum größeren Teil über die erfindungsgemäße Vorrichtung geführt wird und nur der kleinere Restanteil zu der Durchströmungskomponente gelangt.

Der Haupt- und Nebenabschnitt der Zuführleitung können durch die Form der Abzweigung definiert sein, welche beispielsweise als T-Abzweigung gebildet sein kann. Entlang der Hauptanströmrichtung wird das Fluid im Wesentlichen ohne Ablenkung weitergeleitet. Zur Durchströmungskomponente muss das Fluid hingegen einen, beispielsweise 90°, abgewinkelten Nebenabschnitt durchlaufen.

In entsprechender Weise kann die Abführleitung gebildet sein. So kann diese eine Abzweigung aufweisen, an welcher ein Hauptabschnitt zu der Vorrichtung führt und ein Nebenabschnitt in einer abgewinkelten Richtung zu der Durchströmungskomponente führt.

Durch diese Formung der Abzweigung wird eine über die erfindungsgemäße Vorrichtung geschwächt in die Abführleitung übertragene Pulsation größtenteils von der Durchströmungskomponente weg geleitet. Zudem werden Pulsationen, die von einer Komponente stromabwärts zur Abzweigung in der Abführleitung erzeugt werden, größtenteils zur erfindungsgemäßen Vorrichtung geleitet und nicht zur Durchströmungskomponente.

Trifft ein Energieanteil eines Pulses auf die Durchströmungskomponente, wird an dieser ein Differenzdruckabfall erzeugt. Die Höhe dieses Druckabfalls hängt vom Flusswiderstand der Durchströmungskomponente oder der Zuführleitung mit dieser Komponente ab. Daher kann die Wirkung der erfindungsgemäßen Vorrichtung unterstützt werden, wenn Mittel zum Erzeugen eines Druckabfalls am Nebenabschnitt der Zuführleitung zur Durchströmungskomponente vorgesehen sind. Bei diesen Mitteln kann es sich zum Beispiel um eine Blende oder Drossel handeln.

Die erfindungsgemäße Vorrichtung kann auch in einer erfindungsgemäßen Anlage eingesetzt werden, bei welcher eine zu schützende Durchströmungskomponente seriell zur erfindungsgemäßen Vorrichtung angeordnet ist. In diesem Fall ist die zuvor genannte, parallel zur Vorrichtung angeordnete Durchströmungskomponente eine Blende oder Drossel zum Erzeugen eines Druckabfalls. Die zu schützende Durchströmungskomponente ist mit einer Verbindungsstelle verbunden, an welcher die Blende oder Drossel und die erfindungsgemäße Vorrichtung fluidmäßig verbunden sind. Die Durchströmungskomponente kann dabei seriell stromaufwärts oder stromabwärts zu der Gruppe aus parallel verbundener Drossel und erfindungsgemäßer Vorrichtung angeordnet sein. In der seriellen Anordnung reduziert die erfindungsgemäße Vorrichtung in der Abführleitung Pulsationen, die von der Zuführleitung ausgehen, und umgekehrt. Diese Ausführung kann beispielsweise zur Reduzierung von Pulsationen einer Pumpe vorteilhaft sein, die stromaufwärts mit der Zuführleitung verbunden ist oder die stromabwärts mit der Abführleitung verbunden ist.

Je nach Betrieb der erfindungsgemäßen Anlage können die Zuführ- und Abführleitung in ihrer Funktion auch vertauscht werden. Dies ist insbesondere der Fall, wenn sich die Fluidströmung durch die Anlage umkehren kann.

Weitere Merkmale und Vorteile der Erfindung werden mit Bezug auf die beigefügten schematischen Zeichnungen erläutert.
- Fig. 1: zeigt ein Ausführungsbeispiel einer erfindungsgemäßen Vorrichtung.
- Fig. 2: zeigt ein Ausführungsbeispiel einer erfindungsgemäßen Anlage, welche die Vorrichtung aus Fig. 1 umfasst.

Gleiche oder gleichwirkende Bauteile sind in beiden Figuren mit übereinstimmenden Bezugszeichen versehen.

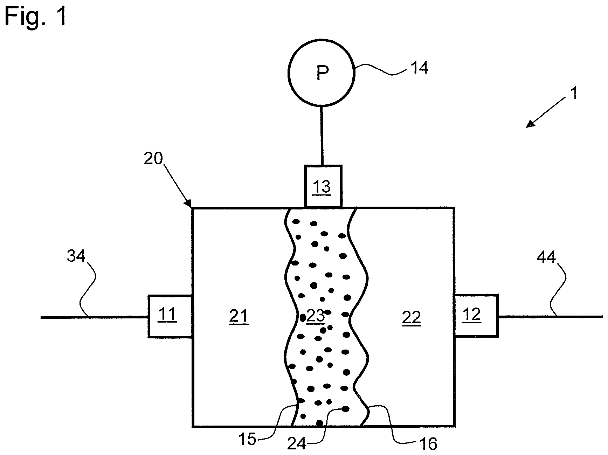

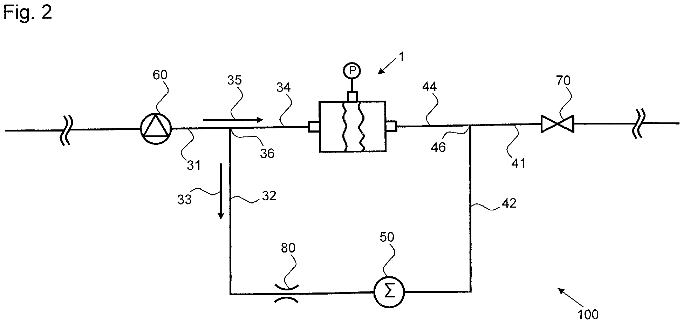

Ein bevorzugtes Ausführungsbeispiel einer erfindungsgemäßen Vorrichtung 1 und einer erfindungsgemäßen Anlage 100 werden nachstehend mit Bezug auf die Figuren 1 und 2 beschrieben.

Fig. 2 zeigt eine Anlage 100, die eine Durchströmungskomponente 50 umfasst, welche von einem Fluid durchströmt wird. Bei dem Fluid kann es sich prinzipiell um eine beliebige Flüssigkeit oder ein beliebiges Gas handeln. Die Durchströmungskomponente 50 soll vor Pulsationen des Fluids geschützt werden. Dies ist beispielsweise erforderlich, wenn die Durchströmungskomponente 50 ein Durchflussmessgerät ist.

Die Pulsationen können insbesondere durch eine Pumpe 60 verursacht werden, welche das Fluid über eine Zuführleitung 31, 32 zur Durchströmungskomponente 50 befördert.

Um die Intensität zu reduzieren, mit der Pulsationen auf die Durchströmungskomponente 50 treffen, ist eine Vorrichtung 1 vorgesehen. Diese ist parallel zur Durchströmungskomponente 50 angeschlossen. Das heißt, die Zuführleitung 31 teilt sich an einer Abzweigung 36 in zwei Abschnitte oder Leitungsabschnitte, von denen ein Leitungsabschnitt 32 Fluid zur Durchströmungskomponente 50 führt, während der andere Leitungsabschnitt 34 Fluid zur Vorrichtung 1 führt. In entsprechender Weise weist eine Abführleitung 41 eine Abzweigung/Zusammenführung 46 auf, an welcher ein Leitungsabschnitt 44 von der Vorrichtung 1 und ein Leitungsabschnitt 42 von der Durchströmungskomponente 50 zusammentreffen.

Die Vorrichtung 1 stellt keine durchgehende Fluidverbindung her. Ist die Durchströmungskomponente 50 ein Durchflussmesser, wird folglich dessen Durchflussmessung nicht durch die Vorrichtung 1 verfälscht. Um vor Pulsationen zu schützen, leitet die Vorrichtung 1 allerdings Impulse des Fluids weiter, also vom Leitungsabschnitt 34 zum Leitungsabschnitt 44. Dadurch werden Pulsationen maßgeblich an der Durchströmungskomponente 50 vorbei geleitet. Vorzugsweise führt die Vorrichtung 1 auch zu einer Dämpfung der Pulsation.

Die Wirkungsweise der Vorrichtung 1 wird nun näher mit Bezug auf Fig. 1 beschrieben.

Die Vorrichtung 1 weist einen ersten und einen zweiten Fluidanschluss 11 und 12 auf, welche mit dem Leitungsabschnitt 34 der Zuführleitung und dem Leitungsabschnitt 44 der Abführleitung verbunden sind.

Zwischen den beiden Fluidanschlüssen 11 und 12 umfasst die Vorrichtung 1 einen Innenraum 20, in welchen Fluid von den beiden Anschlüssen 11 und 12 eintreten kann. Der Innenraum 20 kann zylindrisch ausgeführt sein, wobei sich die Anschlüsse 11 und 12 an dessen Stirnseiten befinden.

Der Innenraum 20 stellt jedoch keine Fluidverbindung zwischen den Anschlüssen 11 und 12 bereit. Vielmehr sind zwei Trennmittel 15 und 16 im Innenraum 20 vorhanden. Dadurch wird der Innenraum 20 in eine mit dem Anschluss 11 verbundene Kammer 21 und eine davon getrennte mit dem Abschluss 12 verbundene Kammer 22 geteilt.

Die Trennmittel 15 und 16 sind beweglich, wodurch sie Pulsationen weiterleiten und/oder dämpfen können.

Die dämpfende Wirkung kann durch eine höhere Anzahl hintereinander angeordneter Trennmittel 15, 16 verstärkt werden. Zwischen benachbarten Trennmitteln 15, 16 wird jeweils ein zentraler Abschnitt 23 gebildet. In diesem befindet sich ein Dämpfungsfluid 24. Pulsationen werden daher vom Fluid in der ersten Kammer 21 über das Trennmittel 15 an das Dämpfungsfluid 24 und von dort weiter über das Trennmittel 16 an das Fluid in der zweiten Kammer 22 übertragen und dabei gedämpft. Auch bei Pulsationen in umgekehrter Richtung erfolgt eine gedämpfte Übertragung.

Ein zentraler Anschluss 13 ist bevorzugt am zentralen Abschnitt 23 vorhanden. Über diesen kann das Dämpfungsfluid 24 eingefüllt werden. Zudem kann eine Messeinrichtung 14 angeschlossen werden, welche eine Eigenschaft, beispielsweise den Druck, des Dämpfungsfluids 24 überwacht.

Damit eine Pulsation zu einem möglichst großen Anteil zur Vorrichtung 1 und nicht etwa zur Durchströmungskomponente 50 gelangt, ist die Form der Zuführleitung 31, 32, 34 bedeutsam. Wie in Fig. 2 dargestellt, kann die Abzweigung 36 der Zuführleitung 31 so gestaltet sein, dass eine Fluidweiterleitung zur Vorrichtung 1 in axialer Richtung 35, das heißt in Hauptanströmrichtung, erfolgt. Die Durchströmungskomponente 50 ist hingegen erreichbar, indem die Fluidströmung an der Abzweigung 36 eine Richtungsänderung entsprechend dem Pfeil 33 erfährt.

In gleicher Weise weist die Abzweigung/Zusammenführung 46 der Abführleitung keinen oder nur einen geringen Knick zur Vorrichtung 1 hin auf, während zur Durchströmungskomponente 50 hin eine Abwinklung von beispielsweise 90° vorhanden ist.

Pulsationen können sich auch von der Abführleitung 41 ausgehend stromaufwärts ausbreiten. Dies kann beispielsweise durch ein Schalten eines Ventils 70 in der Abführleitung 41 eintreten.

Um Pulsationen weiter zu unterdrücken, kann der Fließwiderstand im Leitungsabschnitt 32 zur Durchströmungskomponente 50 erhöht werden. Zu diesem Zweck kann eine Drossel oder Blende 80 im Leitungsabschnitt 32 vorgesehen sein.

Durch diese parallele Anordnung der erfindungsgemäßen Vorrichtung 1 kann eine Durchströmungskomponente 50 wirkungsstark geschützt werden.

Die Verwendung der erfindungsgemäßen Vorrichtung 1 ist aber nicht auf eine solche parallele Anordnung beschränkt. So kann sich eine zu schützende Durchströmungskomponente auch an dem in Fig. 2 dargestellten Ort des Ventils 70 in der Abführleitung 41 befinden. Als Durchströmungskomponente 50 kann dann vorzugsweise eine Drossel vorgesehen sein. Weil eine solche Anlage eine Pulsationsdämpfung in der Abführleitung 41 bewirkt, kann auch eine serielle Anordnung der erfindungsgemäßen Vorrichtung 1 und einer zu schützenden Durchströmungskomponente vorteilhaft sein.

Gegenüber herkömmlichen Vorrichtungen zur Pulsationsdämpfung wird für eine besonders große Bandbreite verschiedener Pulse, insbesondere verschiedener Pulsationsfrequenzen, ein wirkungsvoller Schutz bereitgestellt.

Zudem ist die erfindungsgemäße Vorrichtung verhältnismäßig raumsparend, insbesondere im Vergleich zu speichernden Pulsationsdämpfern. Dadurch kann sie auch in bestehende Anlagen leicht und kostensparend integriert werden.

## Patentansprüche

1. Vorrichtung zum Schutz vor Fluidpulsationen mit
- einem ersten Fluidanschluss (11),
- einem zweiten Fluidanschluss (12) und
- einem zwischen dem ersten und dem zweiten Fluidanschluss (11, 12) gelegenen Innenraum (20),
**dadurch gekennzeichnet,**
- **dass** in dem Innenraum (20) mindestens zwei elastische, gleich gebildete Trennmittel (15, 16) hintereinander liegend vorgesehen sind, welche den Innenraum (20) in zumindest eine erste Kammer (21), die dem ersten Fluidanschluss (11) zugewandt ist, und eine zweite Kammer (22), die dem zweiten Fluidanschluss (12) zugewandt ist, fluidmäßig trennen und so einen Durchfluss durch die Vorrichtung verhindert,
- **dass** zwischen den mindestens zwei Trennmittel (15, 16) eine zentrale Kammer (23) gebildet ist, die zwischen der ersten und der zweiten Kammer (21, 22) liegt und von diesen fluidmäßig getrennt ist, und
- **dass** die Trennmittel (15, 16) unabhängig voneinander bewegbar sind zum Dämpfen oder Weiterleiten einer auftreffenden Fluidpulsation.

2. Vorrichtung nach Anspruch 1,
**dadurch gekennzeichnet,**
**dass** die bewegbaren Trennmittel (15, 16) verschiebbar ist.

3. Vorrichtung nach Anspruch 2,
**dadurch gekennzeichnet,**
**dass** die zentrale Kammer (23) mit einem Dämpfungsfluid (24) zur Dämpfung von Fluidpulsationen, die auf eines der bewegbaren Trennmittel (15, 16) wirken, gefüllt ist.

4. Vorrichtung nach Anspruch 3,
**dadurch gekennzeichnet,**
**dass** an der zentralen Kammer (23) eine Messeinrichtung (14) zum Erfassen einer Eigenschaft des Dämpfungsfluids (24) vorgesehen ist.

5. Anlage mit
- einer Durchströmungskomponente (50), welche von einem Fluid durchströmbar ist,
- einer Zuführleitung (31) zum Leiten des Fluids zu der Durchströmungskomponente (50) und
- einer Abführleitung (41) zum Weiterleiten des Fluids von der Durchströmungskomponente (50),
**dadurch gekennzeichnet,**
**dass** eine Vorrichtung (1) nach einem der Ansprüche 1 bis 4 vorgesehen ist und dass die Vorrichtung (1) mit der Zuführleitung (31) und der Abführleitung (41) parallel zu der Durchströmungskomponente (50) verbunden ist.

6. Anlage nach Anspruch 5,
**dadurch gekennzeichnet,**
**dass** die Zuführleitung (31) eine Abzweigung (36) aufweist, an welcher ein Hauptabschnitt (34) der Zuführleitung (31) in Hauptanströmrichtung des Fluids zu der Vorrichtung (1) führt und ein Nebenabschnitt (32) der Zuführleitung (31) in einer abgewinkelten Richtung zu der Durchströmungskomponente (50) führt.

7. Anlage nach Anspruch 5 oder 6,
**dadurch gekennzeichnet,**
**dass** die Abführleitung (41) eine Abzweigung (46) aufweist, an welcher ein Hauptabschnitt (44) der Abführleitung (41) mit der Vorrichtung (1) verbunden ist und ein Nebenabschnitt (42) der Abführleitung (41) in einer abgewinkelten Richtung mit der Durchströmungskomponente (50) verbunden ist.

8. Anlage nach Anspruch 6 oder 7,
**dadurch gekennzeichnet,**
**dass** Mittel (80) zum Erzeugen eines Druckabfalls am Nebenabschnitt (32) der Zuführleitung (31) zur Durchströmungskomponente (50) vorgesehen sind.

9. Anlage nach einem der Ansprüche 5 bis 8,
**dadurch gekennzeichnet,**
**dass** die Durchströmungskomponente eine Blende oder Drossel zum Erzeugen eines Druckabfalls ist.

10. Verfahren zum Schutz vor Fluidpulsationen,
bei dem ein Fluid von einer Zuführleitung (31) durch eine Durchströmungskomponente (50) und weiter durch eine Abführleitung (41) geleitet wird,
bei dem das Fluid zu einer Vorrichtung (1) zum Schutz vor Fluidpulsationen geleitet wird, welche fluidmäßig mit der Durchströmungskomponente (50) verbunden ist, wobei die Vorrichtung (1) zum Schutz vor Fluidpulsationen mit der Zuführleitung (31) und der Abführleitung (41) parallel zu der Durchströmungskomponente (50) verbunden ist,
**dadurch gekennzeichnet,**
- **dass** in einem Innenraum (20) der Vorrichtung (1) mindestens zwei unabhängig voneinander bewegbaren Trennmittel (15, 16) vorgesehen sind, welche den Innenraum (20) in zumindest eine erste Kammer (21) und eine zweite Kammer (22) fluidmäßig trennen, wobei die erste Kammer (21) mit der Zuführleitung (31) fluidmäßig verbunden ist und die zweite Kammer (22) mit der Abführleitung (41) fluidmäßig verbunden ist,
- **dass** die mindestens zwei bewegbaren Trennmittel elastisch und gleich ausgebildet sind und hintereinander liegend vorgesehen sind,
- **dass** zwischen den mindestens zwei bewegbaren Trennmittel (15, 16) eine zentrale Kammer (23) gebildet ist, die zwischen der ersten und der zweiten Kammer (21, 22) liegt und von diesen fluidmäßig getrennt ist, und
- **dass** bei einer Fluidpulsation in der Zuführleitung (31) oder in der Abführleitung (41) ein Impuls über die bewegbaren Trennmittel (15, 16) übertragen wird, aber kein Durchfluss des Fluids durch die Vorrichtung (1) ermöglicht wird.

## Claims

1. Device for protection against fluid pulsations having
- a first fluid connector (11),
- a second fluid connector (12) and
- an interior space (20) located between the first and the second fluid connector (11, 12),
**characterized in that**
- in the interior space (20) at least two elastic, identically formed separating means (15, 16) are provided lying behind each other, which separate the interior space (20) fluidically into at least a first chamber (21), which faces towards the first fluid connector (11), and a second chamber (22), which faces towards the second fluid connector (12), and thereby prevent a flow through the device,
- **in that** between the at least two separating means (15, 16) a central chamber (23) is formed which is located between the first and the second chamber (21, 22) and is separated from these fluidically and
- **in that** the separating means (15, 16) are movable independently of each other for damping or transmitting an impinging fluid pulsation.

2. Device according to claim 1,
**characterized in that**
the movable separating means (15, 16) are displaceable.

3. Device according to claim 2,
**characterized in that**
the central chamber (23) is filled with a damping fluid (24) for damping fluid pulsations that act on one of the movable separating means (15, 16).

4. Device according to claim 3,
**characterized in that**
on the central chamber (23) a measuring means (14) for detecting a property of the damping fluid (24) is provided.

5. System having
- a through-flow component (50) which can be flowed through by a fluid,
- a supply line (31) for passing the fluid to the through-flow component (50) and
- a discharge line (41) for passing the fluid onwards from the through-flow component (50),
**characterized in that**
a device (1) according to any one of claims 1 to 4 is provided and
**in that** the device (1) is connected to the supply line (31) and the discharge line (41) parallel to the through-flow component (50).

6. System according to claim 5,
**characterized in that**
the supply line (31) has a branch-off (36), on which a main section (34) of the supply line (31) leads in the main inflow direction of the fluid to the device (1) and a secondary section (32) of the supply line (31) leads in an angled direction to the through-flow component (50).

7. System according to claim 5 or 6,
**characterized in that**
the discharge line (41) has a branch-off (46), on which a main section (44) of the discharge line (41) is connected to the device (1) and a secondary section (42) of the discharge line (41) is connected in an angled direction to the through-flow component (50).

8. System according to claim 6 or 7,
**characterized in that**
means (80) for generating a pressure drop on the secondary section (32) of the supply line (31) to the through-flow component (50) are provided.

9. System according to any one of claims 5 to 8,
**characterized in that**
the through-flow component is an orifice or throttle for generating a pressure drop.

10. Method for protection against fluid pulsations,
in which a fluid is passed from a supply line (31) through a through-flow component (50) and further on through a discharge line (41),
in which the fluid is passed to a device (1) for protection against fluid pulsations, which is connected fluidically to the through-flow component (50), wherein the device (1) for protection against fluid pulsations is connected to the supply line (31) and the discharge line (41) parallel to the through-flow component (50), **characterized in that**
- in an interior space (20) of the device (1) at least two separating means (15, 16) are provided that are movable independently of each other and separate the interior space (20) fluidically into at least a first chamber (21) and a second chamber (22), wherein the first chamber (21) is connected fluidically to the supply line (31) and the second chamber (22) is connected fluidically to the discharge line (41),
- **in that** the at least two movable separating means are of elastic and identical design and are provided lying behind each other,
- **in that** between the at least two movable separating means (15, 16) a central chamber (23) is formed which is located between the first and the second chamber (21, 22) and is separated from these fluidically and
- **in that** in the case of a fluid pulsation in the supply line (31) or in the discharge line (41) an impulse is transmitted via the movable separating means (15, 16), however no flow of the fluid through the device (1) is rendered possible.

## Revendications

1. Dispositif de protection contre les pulsations de fluide avec
- un premier raccord de fluide (11),
- un second raccord de fluide (12) et
- un espace intérieur (20) placé entre le premier et le second raccord de fluide (11, 12),
**caractérisé en ce que**
- au moins deux moyens de séparation (15, 16) élastiques formés de manière identique se trouvant l'un derrière l'autre sont prévus dans l'espace intérieur (20), lesquels séparent par voie fluidique l'espace intérieur (20) en au moins une première chambre (21) qui est tournée vers le premier raccord de fluide (11), et une seconde chambre (22) qui est tournée vers le second raccord de fluide (12) et empêche ainsi une circulation à travers le dispositif,
- entre les au moins deux moyens de séparation (15, 16) est formée une chambre centrale (23) qui se trouve entre la première et la seconde chambre (21, 22) et est séparée par voie fluidique de celles-ci, et
- les moyens de séparation (15, 16) sont mobiles indépendamment l'un de l'autre pour l'amortissement ou la transmission d'une pulsation de fluide incidente.

2. Dispositif selon la revendication 1,
**caractérisé en ce que**
les moyens de séparation mobiles (15, 16) sont coulissants.

3. Dispositif selon la revendication 2,
**caractérisé en ce que**
la chambre centrale (23) est remplie avec un fluide d'amortissement (24) pour l'amortissement de pulsations de fluide qui agissent sur un des moyens de séparation mobiles (15, 16).

4. Dispositif selon la revendication 3,
**caractérisé en ce que**
un dispositif de mesure (14) est prévu au niveau de la chambre centrale (23) pour la détection d'une propriété du fluide d'amortissement (24).

5. Installation avec
- un composant de passage (50) qui peut être traversé par un fluide,
- une conduite d'alimentation (31) pour l'acheminement du fluide vers le composant de passage (50) et
- une conduite d'évacuation (41) pour la transmission du fluide du composant de passage (50),
**caractérisée en ce que**
un dispositif (1) selon l'une quelconque des revendications 1 à 4 est prévu et
le dispositif (1) est relié à la conduite d'alimentation (31) et à la conduite d'évacuation (41) parallèlement au composant de passage (50).

6. Installation selon la revendication 5,
**caractérisée en ce que**
la conduite d'alimentation (31) présente une bifurcation (36) sur laquelle une section principale (34) de la conduite d'alimentation (31) mène dans le sens d'afflux principal du fluide au dispositif (1) et une section accessoire (32) de la conduite d'alimentation (31) mène dans un sens coudé au composant de passage (50).

7. Installation selon la revendication 5 ou 6,
**caractérisée en ce que**
la conduite d'évacuation (41) présente une bifurcation (46) sur laquelle une section principale (44) de la conduite d'évacuation (41) est reliée au dispositif (1) et une section accessoire (42) de la conduite d'évacuation (41) est reliée dans un sens coudé au composant de passage (50).

8. Installation selon la revendication 6 ou 7,
**caractérisée en ce que**
des moyens (80) sont prévus pour la génération d'une chute de pression sur la section accessoire (32) de la conduite d'alimentation (31) au composant de passage (50).

9. Installation selon l'une quelconque des revendications 5 à 8,
**caractérisée en ce que**
le composant de passage est un diaphragme ou élément d'étranglement pour la génération d'une chute de pression.

10. Procédé de protection contre des pulsations de fluide,
dans lequel un fluide est acheminé d'une conduite d'alimentation (31) vers un composant de passage (50) et au-delà vers une conduite d'évacuation (41),
dans lequel le fluide est acheminé vers un dispositif (1) pour la protection contre des pulsations de fluide, qui est relié par voie fluidique au composant de passage (50), dans lequel le dispositif (1) pour la protection contre des pulsations de fluide est relié à la conduite d'alimentation (31) et à la conduite d'évacuation (41) parallèlement au composant de passage (50),
**caractérisé en ce que**
- dans un espace intérieur (20) du dispositif (1) au moins deux moyens de séparation (15, 16) mobiles indépendamment l'un de l'autre sont prévus, lesquels séparent par voie fluidique l'espace intérieur (20) en au moins une première chambre (21) et une seconde chambre (22), dans lequel la première chambre (21) est reliée par voie fluidique à la conduite d'alimentation (31) et la seconde chambre (22) est reliée par voie fluidique à la conduite d'évacuation (41),
- les au moins deux moyens de séparation mobiles sont réalisés de manière élastique et de manière identique et se trouvent l'un derrière l'autre,
- une chambre centrale (23) est formée entre les au moins deux moyens de séparation (15, 16) mobiles qui se trouve entre la première et la seconde chambre (21, 22) et est séparée par voie fluidique de celles-ci, et
- lors d'une pulsation de fluide dans la conduite d'alimentation (31) ou dans la conduite d'évacuation (41) une impulsion est transmise par l'intermédiaire des moyens de séparation (15, 16) mobiles mais aucune circulation du fluide à travers le dispositif (1) n'est permise.
